# EUROPEAN PATENT APPLICATION

(11) **EP 1 777 891 A1**
(43) Date of publication of application: **25.04.2007**
(21) Application number: 05292231.7
(22) Date of filing: 21.10.2005
(51) Int. Cl.: H04L 12/56, H04L 12/28

(54) **A method for providing a group of mobile terminals moving together with a high data rate service**

(71) Applicant: Alcatel Lucent, 75008 Paris (FR)
(72) Inventor: Kerboeuf, Sylvaine, 91140 Villebon-sur-Yvette (FR); Faye, Jean-Claude, 91170 Gif sur Yvette (FR); Rouffet, Denis, 92100 Boulogne-Billancourt (FR)
(74) Representative: Richardt, Markus Albert

(57) **Abstract**

For providing one or more mobile terminals (4) moving together with a high data rate service over a discontinuous coverage access network (1), a method is proposed comprising the steps of:
- interfacing the discontinuous coverage access network (1) with an internet protocol network (5) providing the high data rate service at a group server (4);
- interfacing the one or more mobile terminals (4) with the discontinuous coverage access network (1) at a mobile proxy (2);
- establishing a tunnel (115) between the group server (3) and the mobile proxy (2) to transfer data related to the high data service destined to the one or more mobile terminal (4);
- forwarding the data related to the high data service to the one or more mobile terminal (4);

as well as a mobile proxy (2) and a group server (3).

## Description

### Field of the invention

The present invention relates to a method for providing one or more mobile terminals moving together with a high data rate service over a discontinuous coverage access network. Furthermore it relates to a mobile proxy and a group server for implementing such a method.

### Background and prior art

Following second and third generation networks, such as GSM or UMTS, providing continuous radio coverage, fourth generation (4G) networks are in the process of being developed. 4G is not yet defined and different approaches are competing. Nevertheless, it happens that enabling high data rate services will result in discontinuous coverage access networks with high bit rate and small cell size. One approach consists in pico cell access networks with cache technology. They provide video/audio streaming services and fast download or upload of large data volumes. Zones of non-radio coverage or of low bit rate coverage by a parent coverage network nevertheless separate the high bit rate areas so that no seamless high bit rate services can be provided.

A special aspect of this technical problem is the situation, where a group of users is moving together, e.g. in public transports like trains or busses and some or all of them would like to make use of seamless high bit rate services for listening to music or watching video etc..

To address the special aspect of groups of mobile terminals moving together, a special working group called NEMO (network mobility) has started at IETF. Network mobility arises, when a mobile router connecting a network to the Internet dynamically changes its point of attachment to the Internet, thereby causing the reachability of the network to be changed in relation to the fixed Internet topology. A mobile router correspond to a Mobile Node as defined in IPv6 with added routing capabilities between its point of attachment and a subnet that moves with the mobile router. A bidirectional tunnel is set up between the mobile router and its home agent, when the mobile router sends a successful Binding Update to its home agent, informing the home agent of its current point of attachment. More detailed information on NEMO is to be found inter alia at http://www.ietf.org: NEMO Basic Support Protocol (January 2005) RFC 3963 and Network Mobility Support Goals and Requirements - Internet Draft February 2005.

The NEMO group studies a mobility management based on Mobile IP, i.e. on layer 3 (L3) of the OSI layer model. The major drawback is that, because of its complexity, it is relatively slow and thus not well adapted for offering seamless high data rate service in high or even very high-speed mobile networks as for train or bus applications. In train or bus or other high-speed applications, the point of attachment of the network will change very often and the time spent in the high bit rate cell coverage is very short.

It is an object of the present invention to provide a better possibility of offering high data rate services to end-users being part of a network moving with high speed.

### Summary of the invention

In a first aspect of the present invention, this object is achieved by a method for providing one or more mobile terminals moving together with a high data rate service over a discontinuous coverage access network, said method comprising the steps of:
- interfacing the discontinuous coverage access network with an IP (internet protocol) network providing the high data rate service at a group server;
- interfacing the one or more mobile terminals with the discontinuous coverage access network at a mobile proxy;
- establishing a tunnel between the group server and the mobile proxy to transfer data related to the high data service destined to the one or more mobile terminal;
- forwarding the data related to the high data service to the one or more mobile terminal.

Inside the discontinuous coverage access network, a considerable gain in speed concerning the mobility management is achieved by managing the mobility at a layer below the IP layer, i.e. at the level of Layer 2. Furthermore, due to interfacing of the group of mobile terminals with the discontinuous coverage access network, the mobility is managed at the level of the mobile proxy and not at the individual mobile terminal level. Both measures lead to a simplification of mobility mechanism and signaling.

In preferred embodiments, the method according to the present invention comprises the further step of caching the data related to the high data rate service, with preference in caching means of a network entity and in caching means of the mobile proxy, before forwarding it to the one or more mobile terminal. The network entity is located at the interface between the discontinuous coverage access network and the group server or inside the group server. The network entity retrieves data related to the high data rate service from the IP network and caches it in the network entity caching means, before forwarding it at a higher rate than the data rate to the mobile proxy, when it enters a high bit rate zone, advantageously to some caching means of the mobile proxy. This has the advantage of permitting to efficiently mask discontinuities in radio coverage. By filling caching means while the moving group of terminals with the mobile proxy is in a high bit rate zone, and in particular when the group of terminals seems to be leaving a high bit rate zone in the near future, the mobile proxy can provide the terminals with data from the caching means in case they leave momentarily the high bit rate zone and there is no coverage or only low bit rate coverage.

Preferably, the mobile proxy is used as a terminal for the discontinuous coverage access network. This simplifies further the mobility management by the discontinuous coverage access network. And it has the additional advantage that terminals that are not optimized for use the actual discontinuous coverage access network, for example because they are designed according to standards different of that of the discontinuous coverage access network, especially standards of different generations, may be offered high data rate services, too, as they hook up with the mobile proxy and not directly with the discontinuous coverage access network. The discontinuous coverage access network, on its side, communicates with a dedicated terminal, i.e. the mobile proxy and answers its various requests without knowing that they come from various user terminals "hidden" by the mobile proxy.

The method according to the present invention is particularly efficient, if a pico cell network is used as discontinuous coverage access network. Pico cell networks with associated parent continuous coverage are supposed to be one approach to the 4rth generation networks in the future.

In a further aspect of the present invention, this object is solved by a mobile proxy for providing one or more mobile terminals moving together with a high data rate service over a discontinuous coverage access network, the mobile proxy comprising means for interfacing the one or more mobile terminal with the discontinuous coverage access network by sending high data rate service requests over a tunnel to a group server and by forwarding data, related to the high data rate service and transferred to the mobile proxy by the group server over a tunnel, to the one or more mobile terminals.

Preferably, it further comprises means for caching said data related to the high data service before forwarding it to the one or more mobile terminals.

In preferred embodiments of the present invention, the mobile proxy is a terminal of the discontinuous coverage access network.

In a last aspect of the present invention, this object is solved by a group server for providing one or more mobile terminals moving together with a high data rate service over a discontinuous coverage access network, the group server comprising means for interfacing a discontinuous coverage access network and an IP network by retrieving data related to the high data rate service from the internet protocol network and transferring the data over a tunnel to a mobile proxy interfacing the discontinuous coverage access network and the one or mobile terminals.

Preferably, the group server comprises means for managing a table binding IP addresses of the one or more mobile terminals and the address of the mobile proxy in the discontinuous coverage access network. This permits to efficiently handle the request coming form various mobile terminals via one or eventually more mobile proxies in view of resource allocation.

Advantageously, the group server according to the present invention comprises means for handling proxy functions. This allows for high-level protocol transparency relative to the IP network.

In preferred embodiments, the group server comprises means for caching data from the IP network and destined to the one or more mobile terminals. This is particularly advantageous in case the mobile proxy comprises caching means. It allows the group server to retrieve data related to the high data rate service from the IP network and cache it, before forwarding it at a higher rate as the data rate to the mobile proxy, when the mobile proxy enters a high bit rate area. This has the advantage of masking discontinuities in radio coverage.

### Brief description of the drawings

A detailed description of the invention is provided below. Said description is provided by way of a non-limiting example to be read with reference to the attached drawings in which:
- Figure 1: illustrates a flow chart of an embodiment of the present invention;
- Figure 2: shows schematically the concept of the method according to the present invention;
- Figure 3: shows schematically a mobile proxy and a group server according to the present invention;
- Figure 4: shows schematically a further aspect of the method according to the present invention; and
- Figures 5a-d: show schematically how high data rate service is offered to a group of moving terminals in different positions of the moving group with respect to pico cells.

### Detailed description of the invention

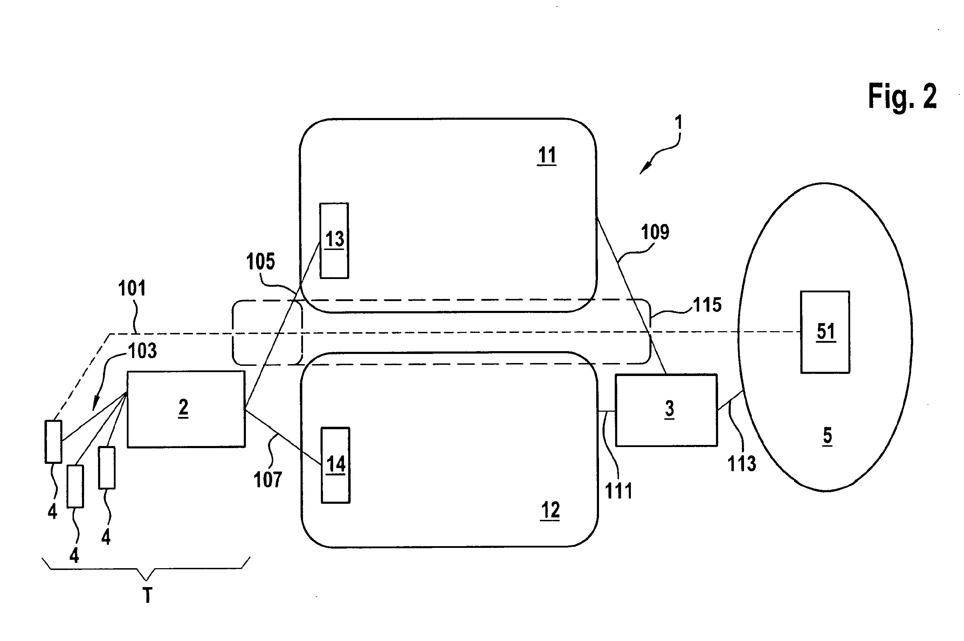

The present invention will be explained more in detail by taking the example of a group of train passengers with mobile terminals. At least one of them would like to make use of a high data rate service during his journey, for example watching a video on his mobile terminal. The train T (see Figure 2) travels with high speed through a discontinuous coverage access network 1 comprising in the present example a pico cell network 12 providing high bit rate zones and a low bit rate parent coverage network 11. The parent coverage network 1 may be any network providing continuous coverage such as 3G (third generation) cellular networks, e.g. WiMAX. The video the train passenger wants to watch is to be found in the Internet 5, which has to be accessed via the discontinuous coverage access network 1.

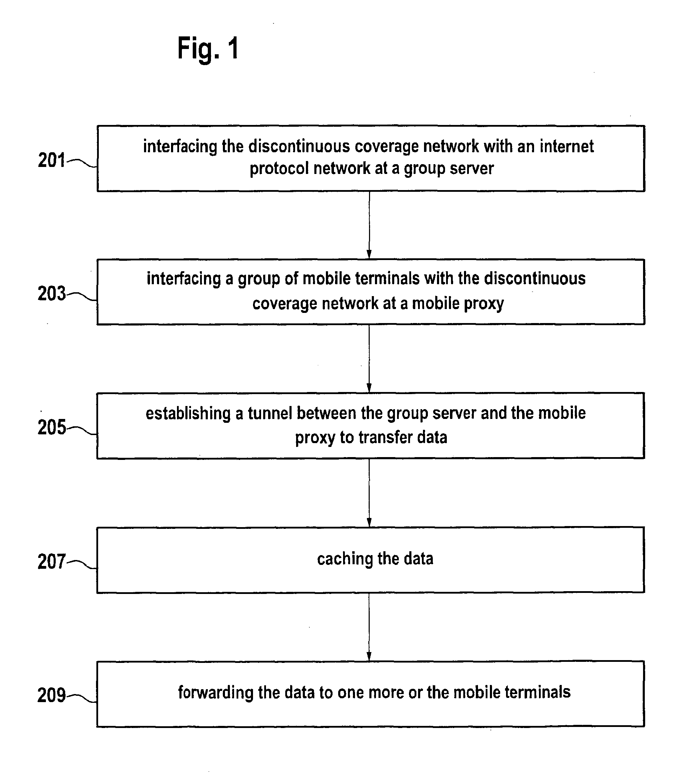

According to an embodiment of the present invention as set forth in Figure 1, the video service is provided to the train passenger by, on the one hand, interfacing the discontinuous coverage access network 1 (see Figure 2) with the Internet 5 at a group server 3 (step 201) and, on the other hand, by interfacing the train passengers' mobile terminals 4 with the discontinuous coverage access network at a mobile proxy 2 (step 203). A tunnel 115 is established between the group server 3 and the mobile proxy 2 to transfer data related to the video service (step 205). This data comprises inter alia signaling data for establishing the connection, the request for the video coming from the mobile proxy 2 to the group server 3 and the video stream coming from the group server 3. To avoid the negative impact of coverage discontinuities due to the train T temporarily leaving a cell of the pico cell network 12, the video data is cached in the mobile proxy 2, while the train T is in a pico cell and not forwarded to the mobile terminal 4 to be able to continue to provide the passenger with the video service, even when bad radio conditions occur, by forwarding cached data (step 209). To further improve apparent video service continuity to the passenger, the video data can be cached at a network entity, i.e. in the group server 3 or at the interface between the group server 3 and the discontinuous coverage access network 1. It is also possible to cache the video data only at the group server 3 or the interface between the group server 3 and the discontinuous coverage access network 1.

The mobile proxy 2 is located in the train T and moves together with the mobile terminals 4 of the passengers. When entering the train T, the passengers activate their public transport profile, so that their terminals 4 are attached to the mobile proxy 2 via connections 103, the mobile proxy 2 having the function of a radio access point for the user terminals 4. The mobile proxy 2 is configured to permit attachment of any legacy terminal besides 4G (fourth generation) terminals dedicated to pico cell networks, e.g. 3G, WiFi or WiMAX terminals. All adaptation or any new protocol to allow communication with a specific legacy terminal is handled by the mobile proxy 2. Thus, the mobile proxy 2 hides the discontinuous coverage access network 1 to the user terminals 4. With respect to the discontinuous coverage access network 1, the mobile proxy 2 plays the role of a dedicated terminal and thus hides the group of user terminals 4 to the discontinuous coverage access network 1.

The mobile proxy 2 is attached to the parent coverage network 11 via connection 105 and moves through discontinuous 4G pico cells of the pico cell network 12, as the train T moves, attaching to the actual pico cell via connection 107. Mobility is managed at the mobile proxy level by the parent coverage network 11 and/or the pico cell network 12 using L2.5/L2 mobility mechanisms and not at the level of the individual terminals 4. The mobility mechanisms and the signaling are quite simple, as the attachment step to the discontinuous coverage access network 1 is done only once with the mobile proxy 2 and not with individually with each user terminal 4.

The mobility management is supported by the establishment of a tunnel 115 between the mobile proxy 2 and the group server 3, as the establishment of a tunnel allows as well many passengers to be seen as a single entity at the level of the discontinuous coverage access network 1, in particular at the level of the pico cell network 11. This group management enhances the capacity performance of the discontinuous coverage access network 1, in particular at the level of the pico cell network 12, in comparison with an individual management.

The group server 3 is located at the interface with the gateway of the discontinuous coverage access network 1 and with external public IP networks such as the Internet 5. The group server 3 is located such that all IP packets addressed to user terminals 4 flow through it. It manages a table binding the IP addresses of the user terminals 4 and the address of the mobile proxy 2 valid in the discontinuous coverage access network 1. Besides, the group server 3 handles proxy functions to allow high-level protocol transparency, such as RTP/RTCP, RTSP, FTP, TCP etc.. The group server 3 encapsulates packets and tunnels them either through the gateway of the pico cell network 12 via connection 111, if they are data packets, or through the parent coverage network 11 via connection 109 to the mobile proxy 2, if they are session signaling packets. The data packets are received by the group server 3 from a content server 51 being part of the Internet 5 via connection 113. If more than one mobile proxy 2 is attached to the discontinuous coverage access network 1, the group server 3 regroups the requests from the user terminals 4 and the data packets from the Internet depending on at which mobile proxy 2 the user terminals 4 are attached.

The mobile proxy 2 decapsulates the data packets received from the group server 3, and delivers the data packets to the respective mobile terminal 4 of the train passenger making use of the specific high data rate service. As the discontinuous coverage access network 1 is hidden to the mobile terminals 4 of the train passengers, for them it seems like having a direct connection 101 from the mobile terminal 4 to the Internet server 51.

It will be noted that the tunnel 115 shows a small loop on the mobile proxy side for tasks that do not necessarily require access to the Internet 5, such as giving or receiving a call. In such cases, conventional communication over the pico cell network 12 and/or the parent coverage network 11 is sufficient.

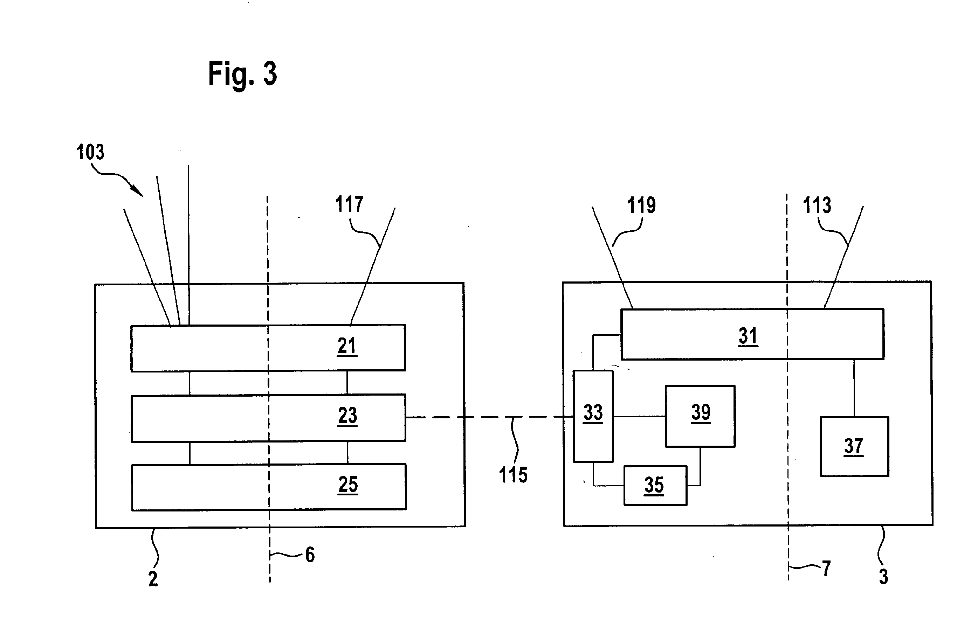

Figure 3 shows the mobile proxy 2 and the group server 3 more in detail. The mobile proxy 2 according to the present example has sending means 21, forwarding means 23 and a cache memory 25. The sending means 21 is in charge of providing a point of attachment to various mobile terminals, the mobile terminal being of the same standard as the parent coverage network, as the pico cell network or any other standard. All adaptations or any new protocol to allow communication with the various mobile terminals over connections 103 is handled in the sending means 21. Furthermore, the sending means 21 is in charge of establishing the communication with the discontinuous coverage access network over connections 117, especially to send request for high data services according to the request coming from the mobile terminals.

The encapsulating of requests and the decapsulating of data packets received from the group server 3 via the tunnel 115 is done by the forwarding means 23. The forwarding means is also in charge of delivering the right data packet to the respective mobile terminal. The decapsulated data is cached in the cache memory 25, and the data forwarded to the mobile terminals is provided by the cache memory 25 to mask the discontinuities of the discontinuous coverage access network.

All these functions result in the mobile proxy 2 efficiently interfacing the mobile terminals on the one side and the discontinuous coverage access network on the other side (symbolized by broken line 6).

The group server 3 according to the present example has retrieving means 31, transferring means 33, table managing means 35, proxy function means 37 and a cache memory 39. The retrieving means 31 establishes communication connections 119, 113 with the discontinuous coverage access network and the external IP network respectively. The requests received via tunnel 115 from the mobile proxy 2 are decapsulated in transferring means 33. Transferring means 33 also encapsulates the data packets destined to mobile terminals attached to the mobile proxy 2 by tunneling. In particular, if there is more than one mobile proxy 2 with attached mobile terminals, the transferring means 33 cooperates with the table managing means 35. It manages a table binding the IP addresses and the respective mobile proxy addresses valid in the discontinuous coverage access network. For improving communication with the external IP network, a proxy function means 37 provides high-level transport protocol transparency. Data from the external IP network and destined to the mobile terminals is cached in the cache memory 39 and sent to the cache memory 25 of the mobile proxy 2 with a higher rate than the data rate, when the mobile proxy enters a high bit rate area.

All these functions result in the group server 3 efficiently interfacing the discontinuous coverage access network on the one side and external IP networks on the other side (symbolized by broken line 7).

It will be noted, that network entity caching for masking coverage discontinuities may also provided at the interface of group server 3 and the discontinuous coverage access network.

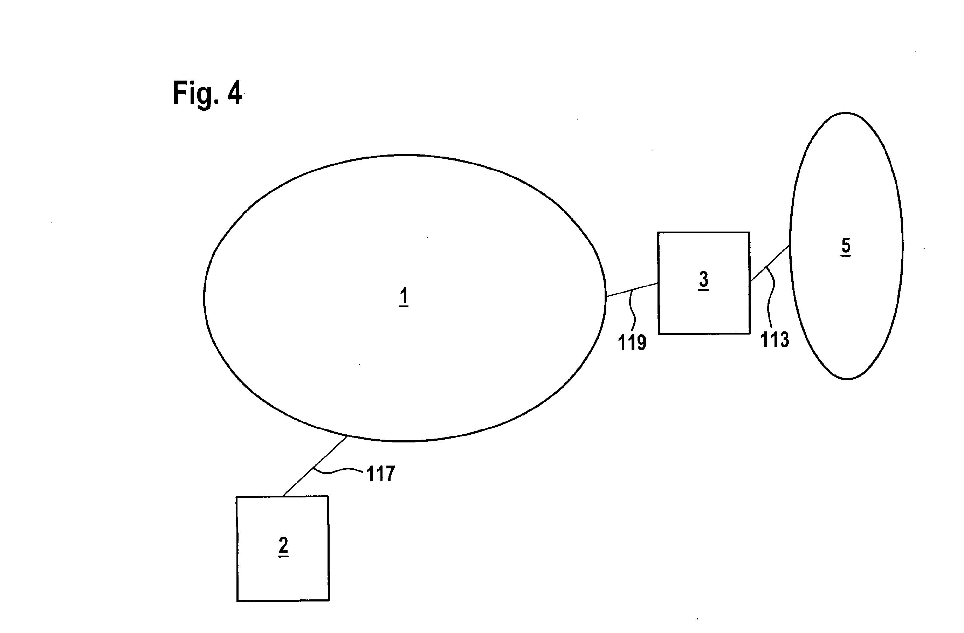

Figure 4 shows the simplified architecture equivalent to the architecture illustrated in Figure 2. As consequence of applying the method according to the present invention, the mobile proxy 2 acts as a normal and dedicated terminal to the discontinuous coverage access network 1. Access to the Internet 5 is provided the group server 3 acting as gateway.

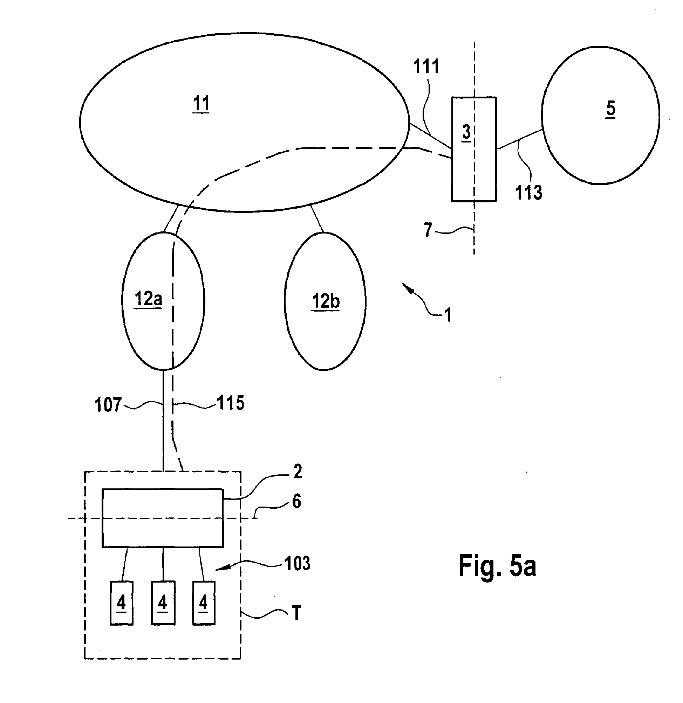

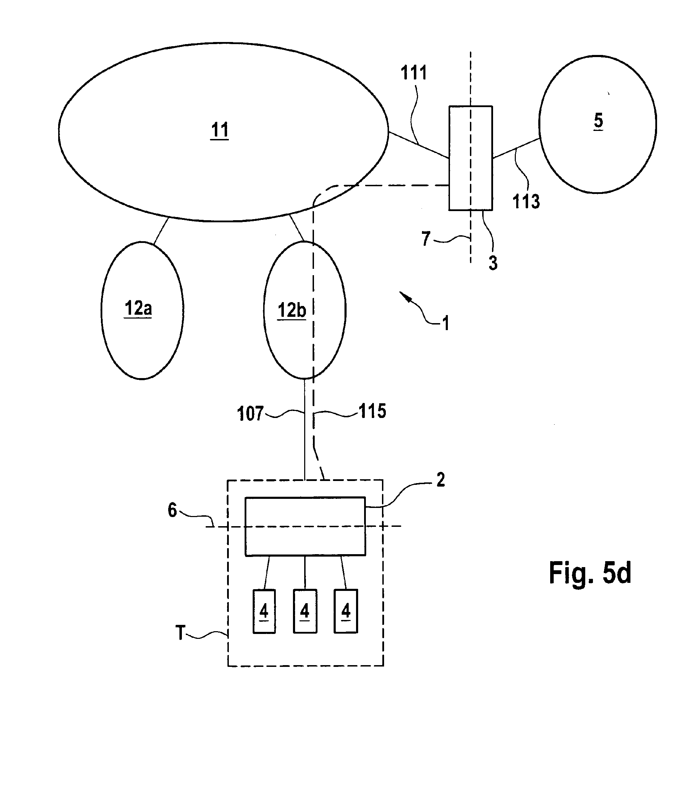

Figures 5a-d illustrate the situation in different positions of the train T with mobile proxy 2 and user terminals 4 with respect to pico cells 12a, b. In Figure 5a, the train T is under the coverage of pico cell 12a. The tunnel 115 between mobile proxy 2 and group server 3 is established to provide every passenger with the high data rate service he wishes. The high bit rate provided by pico cell 12a is in particular used for filling the cache memory in mobile proxy 2.

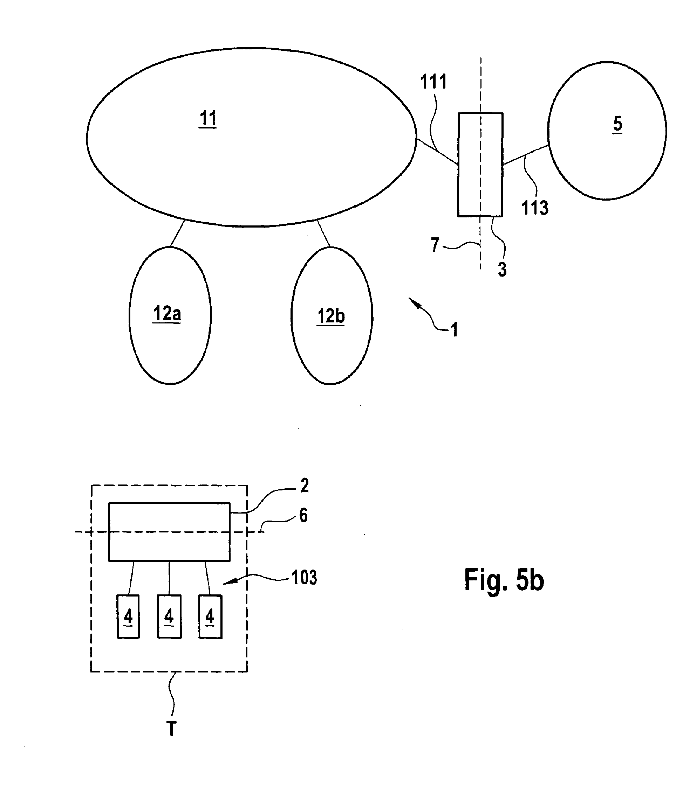

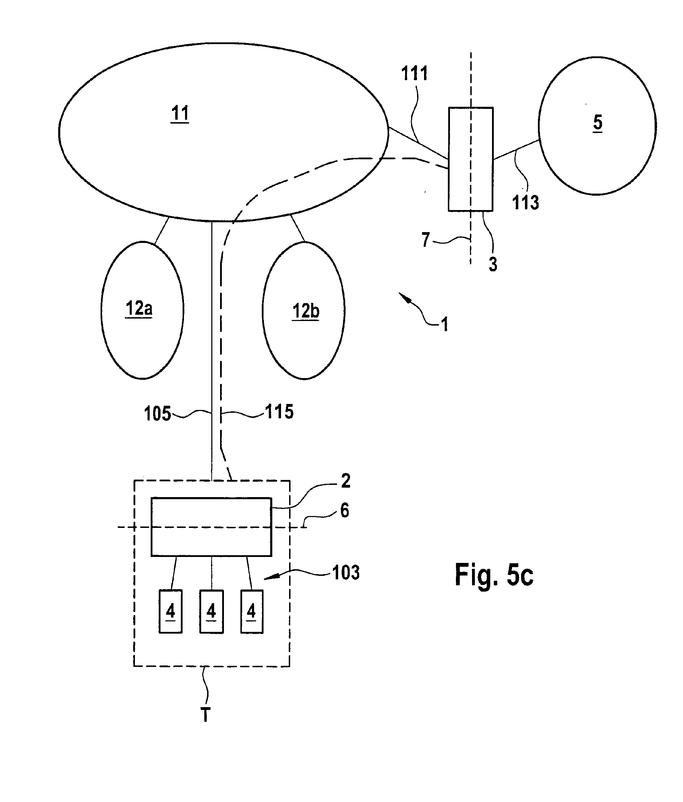

As the train moves farther, it leaves the coverage of pico cell 12a. Depending on the configuration of the discontinuous coverage access network 1, either the tunnel 115 breaks down and data transfer is interrupted (Figure 5b), or the tunnel 115 is supported by the parent coverage network 11 alone (Figure 5c), thus providing only low bit rate transmission. In both cases, the train passengers are still provided with their respective high data rate service - thanks to the data cached in the mobile proxy 2. As soon as the train enters the coverage of the next pico cell 12b, the tunnel 115 is reestablished and the high bit rate data transfer will resume.

It will be noted that the train can move with very high speed, if it is e.g. a TGV in France or a shinkansen in Japan, thus entering and leaving pico cells along the rail track very fast. Accordingly, the point of attachment of the mobile proxy changes very often and quickly. The mobility management on a lower level, i.e. under the IP level, according to the present invention prevents this high mobility to impede high data rate services.

It will be noted, that the present invention may as well be realized with a continuous coverage network of fourth generation. The parent coverage network would be obsolete. The mobile proxy and the group server would still be useful for grouping the requests from the user terminals and for grouping the transfer of data packets to the user terminals as well as for masking coverage discontinuities during hand over from one 4G cell to the next one or during other temporal deterioration of the radio conditions.

Although having described several preferred embodiments of the invention, those skilled in the art would appreciate that various changes, alterations, and substitutions can be made without departing from the spirit and concepts of the present invention.

The invention is, therefore, claimed in any of its forms or modifications with the proper scope of the appended claims. For example various combinations of the features of the following dependent claims could be made with the features of the independent claim without departing from the scope of the present invention. Furthermore, any reference numerals in the claims shall not be construed as limiting scope.

### List of Reference Numerals

- 1: discontinuous coverage access network
- 11: parent network
- 12: pico cell network
- 13, 14: radio access point
- 2: mobile proxy
- 21: sending means
- 23: forwarding means
- 25: cache memory
- 3: group server
- 31: retrieving means
- 33: transferring means
- 35: table managing means
- 37: proxy function means
- 39: cache memory
- 4: user terminal
- 5: IP network
- 51: content server
- 6: interface user terminals - discontinuous coverage access network
- 7: interface discontinuous coverage access network - IP network
- T: train
- 101: connection user terminal - IP network
- 103: connection user terminal - mobile proxy
- 105: connection mobile proxy - parent network
- 107: connection mobile proxy - pico cell
- 109: connection group server - parent network
- 111: connection group server - pico cell
- 113: connection group server - IP network
- 115: tunnel mobile proxy - group server
- 117: connection mobile proxy - discontinuous coverage access network
- 119: connection group server - discontinuous coverage access network
- 201 - 209: steps

## Claims

1. A method for providing one or more mobile terminals moving together with a high data rate service over a discontinuous coverage access network, said method comprising the steps of:
- interfacing the discontinuous coverage access network with an internet protocol network providing the high data rate service at a group server;
- interfacing the one or more mobile terminals with the discontinuous coverage access network at a mobile proxy;
- establishing a tunnel between the group server and the mobile proxy to transfer data related to the high data service destined to the one or more mobile terminal;
- forwarding the data related to the high data service to the one or more mobile terminal.

2. The method according to claim 1, comprising the further step of caching the data related to the high data rate serve in the mobile proxy before forwarding it to the one or more mobile terminal.

3. The method according to claim 1 or 2, wherein the mobile proxy is used as a terminal for the discontinuous coverage access network.

4. A mobile proxy (2) for providing one or more mobile terminals (4) moving together with a high data rate service over a discontinuous coverage access network (1), the mobile proxy (2) comprising means (21, 23) for interfacing the one or more mobile terminal (4) with the discontinuous coverage access network (1) by sending high data rate service requests over a tunnel (115) to a group server (3) and by forwarding data, related to the high data rate service and transferred to the mobile proxy (2) by a group server (5) over a tunnel (115), to the one or more mobile terminals (4).

5. The mobile proxy according to claim 4 with means (25) for caching said data related to the high data service before forwarding it to the one or more mobile terminals (4).

6. The mobile proxy according to claim 4 or 5, wherein the mobile proxy is a terminal (2) of the discontinuous coverage access network (1).

7. A group server (3) for providing one or more mobile terminals (4) moving together with a high data rate service over a discontinuous coverage access network (1), the group server (3) comprising means (31, 33) for interfacing a discontinuous coverage access network (1) and an internet protocol network (5) by retrieving data related to the high data rate service from the internet protocol network (5) and transferring the data over a tunnel (115) to a mobile proxy (2) interfacing the discontinuous coverage access network (1) and the one or mobile terminals (4).

8. The group server according to claim 7 comprising means (35) for managing a table binding internet protocol addresses of the one or more mobile terminals (4) and the address of the mobile proxy (2) in the discontinuous coverage access network (1).

9. The group server according to claim 7 or 8 comprising means (37) for handling proxy functions.

10. The group server according to any of claims 7 to 9, comprising means (39) for caching data from the internet protocol network (5) and destined to the one or more mobile terminals (4).
